# EUROPÄISCHE PATENTSCHRIFT

(11) **EP 1 800 617 B1**
(45) Veröffentlichungstag und Bekanntmachung des Hinweises auf die Patenterteilung: **25.08.2010**
(21) Anmeldenummer: 06125519.6
(22) Anmeldetag: 06.12.2006
(51) Int. Cl.: A61K 6/02, A61C 13/003, A61C 13/00

(54) **Stützpaste**
Support paste
Pâte de support

(30) Priorität: 23.12.2005 DE 102005062192
(43) Veröffentlichungstag der Anmeldung: 27.06.2007
(73) Patentinhaber: Ivoclar Vivadent AG, 9494 Schaan (LI)
(72) Erfinder: Hagenbuch, Konrad, 9469 Haag (CH); Rheinberger, Volker, 9490, Vaduz (LI)
(74) Vertreter: Fitzner, Uwe

(56) Entgegenhaltungen:
- DE-A1- 19 904 523
- US-A- 6 087 281
- US-A1- 2004 148 916
- US-B1- 6 391 813

## Beschreibung

Die Erfindung betrifft Zusammensetzungen für Stützpasten, deren Herstellung und Verwendung im Bereich der Dentaltechnik.

Die Sinterung bzw. Kristallisation von glasigen oder glaskeramischen Formteilen wird bei hohen Temperaturen, nicht selten bis nahe am Erweichungs- oder gar Schmelzpunkt dieser Materialien, durchgeführt. Um einen Verzug der Formteile zu vermeiden, ist es notwendig, diese abzustützen.

Es ist aus dem Stand der Technik bekannt, in Hochtemperaturprozessen sog. Wärmeschutzpasten zu verwenden. Bei diesen Pasten besteht jedoch die Hauptfunktion darin, dass primär ein Schutz des thermisch zu behandelnden Formteils bzw. dessen bauliche Umgebung gewährleistet wird. Diese Produkte sind jedoch für den technischen Einsatz gedacht und somit nicht für die Verwendung bei der Herstellung von Dentalprodukten geeignet. Übliche Bestandteile solcher Pasten sind Glasfasern, Glaspulver, keramische Pulver sowie Wasser und ein Verdickungsmittel, wie z.B. verschiedene Cellulosen.

Der Nachteil dieser Pasten besteht vor allem darin, dass einige Inhaltsstoffe der Pasten mit den Formteilen "verkleben" und in die Oberfläche des Formteils eingelagert werden, so dass diese Reste der Pasten mechanisch entfernt werden müssen. Das Entfernen kann entweder durch Schleifen oder durch Sandstrahlen erfolgen. Dabei besteht der große Nachteil beim Entfernen der Pastenreste in der mechanischen Oberflächenschädigung des Restaurationsteils, das dadurch zu einer Reduzierung der mechanischen Festigkeiten führen kann.
Weiterhin ist es aus der DE 103 39 246 A1 bekannt, eine Wärmeschutzpaste einzusetzen, die bei der thermischen Behandlung eines dentalen Produktes aus Materialien mit unterschiedlichen Wärmeausdehnungskoeffizienten entstehenden Spannungen soweit abbaut, dass keine Spannungsrisse oder gar Abplatzungen auftreten. Diese Wärmeschutzpaste besteht aus Wasser, Diethylenglycol, temperaturfesten Fasern und geeigneten wärmebeständigen Füllstoffen. Der thermisch bedingte Verzug der Formteile wird in dieser Schrift nicht berücksichtigt.

In der DE 198 53 949 A1 wird eine sinterbare Keramikmasse beschrieben, die dazu dient, einzelnen Kronen und Brückensegmente zu einer einzigen festen dentalen Restauration zusammenzusintern.

In der US 2003/0059742 A1 wird die Anwendung von 0,1 - 100 nm großen mineralischen Nanofibres in dental einsetzbaren Implantaten beschrieben. Hierbei werden diese Nanofibres zu Formkörpern gesintert oder Implantate aus anderen Materialien mit diesen Nanofibres beschichtet. Diese gesinterten Nanofibres zeichnen sich durch einen guten Implantat-Knochenverbund aus.

Ähnliche Grundkomponenten wie die erfindungsgemässen sind in der EP 0 464 545 A2 beschrieben. In der Anwendung als Stützpaste würde eine solche Masse jedoch nicht funktionieren, da die Formulierung nach dem Ausbrennen der organischen Paste eine zu starke Volumenkontraktion aufweist und die Stützwirkung nicht gegeben ist.

Aus der DE 36 10 844 C2 ist eine Weiterentwicklung von Dentalzementen bekannt, die in einem Abbindungsprozess zu einer festen Zementmasse mit Druckfestigkeiten von > 600 bar aushärten. Bei Zementen ist es erwünscht, dass sie einen guten Verbund zu den zementierenden Komponenten aufweisen.

Aus der DE 14 67 061 A1 ist es bekannt, Ausgangsstoffe wie Zink und Eisen zu verwenden. Diese können bei hohen Temperaturen zu Reaktionen mit den glasigen oder glaskeramischen Formteilen führen, die wiederum farbliche Beeinträchtigungen oder sogar chemische Reaktionen auslösen, die zu Oberflächenstörungen und somit zu Festigkeitsverlusten führen.

Aus der DE 198 53 949 A1 ist es bekannt, für die Verbindung von dentalen Restaurationsteilen Verbindungsglieder einzusetzen, die durch eine Glaspulverpaste eingesintert werden. Diese Paste oder Aufschlämmung dient hierbei der mechanisch festen Verbindung zwischen Restaurationsteil und Verbindungsglied.

Von der Fa. Functional Designs, Inc. (USA) ist eine Stützpaste unter dem Namen Easy Fix auf dem Markt die wie folgt zusammengesetzt ist:

| | |
|---|---|
| Wasser | 65-70 % |
| Aluminiumsilikatfasern | 20-25 % |
| Amorphes Siliziumdioxid | 5-10 % |
| Hydroxyethylcellulose | 1-3 %. |

Diese Paste erfüllt bezüglich der Stützfunktion die Anforderungen, jedoch verkleben die Fasern und das Siliziumdioxid an der Innenseite der zu stützenden Teile. Die am Formteil verbleibenden Reste der Stützpaste müssen mit einem Partikelstrahlprozess (meist Glas- oder Glaskeramikpulver) entfernt werden. Dieser Prozess führt zu einer Schädigung der Oberflächenstruktur und somit häufig zu einem Festigkeitsabfall des gesamten Formteils.

Bei der Herstellung von dentalen Restaurationsteilen aus nur teilgesintertem Zirkondioxid erfolgt das Dichtsintern bei Temperaturen von ca. 1500 °C. Dazu ist es ebenfalls erforderlich, dieses Restaurationsteil beim Sintervorgang abzustützen. Hierfür sind verschiedene Möglichkeiten bekannt und im Gebrauch.

Die Abstützung kann z. B. durch Einlagern des Restaurationsteiles in einem Bett aus thermisch hochfesten Keramikkugeln erfolgen oder auch durch ein "Auflegen" des Restaurationsteiles auf Stifte, die beweglich angeordnet sind und beim Schrumpfen durch den Sintervorgang den Schwund dadurch ausgleichen, indem sie sich zueinander neigen. Eine weitere Möglichkeit besteht gemäß EP 0 817 597 B1 darin, dass das Restaurationsteil in einem Bett aus dem gleichen teilgesinterten Keramikmaterial gelagert wird, das nicht nur abstützend wirkt, sondern gleichzeitig den gleichen Schwund aufweist wie das Restaurationsteil.

Nachteilig bei den bisher bekannten Ausführungsformen ist, dass die Handhabung kompliziert ist und dass für jede Anwendung abgestimmte Stützsysteme verwendet werden müssen.

Aufgabe der Erfindung ist nunmehr, eine preisgünstige, thermisch stabile und nicht mit dem Formteil verklebende Paste bereitzustellen, die bei der thermischen Behandlung von glasigen und/oder glaskeramischen Formteilen eine zuverlässige Stützfunktion ausübt und die geometrische Stabilität des Formteils beim Sintern und/oder Kristallisieren gewährleistet. Außerdem sollen die Stützpasten zur Unterstützung von anorganischen Formteilen eingesetzt werden können, die bei erforderlichen Sinter-und/oder Kristallisationsvorgängen bis nahe an den Erweichungs- oder Schmelzpunkt aufgeheizt werden müssen, um deren Passgenauigkeit sicherzustellen.

Gelöst wird die erfindungsgemäße Aufgabe durch eine Verwendung einer Mischung wie in Anspruch 1 beansprucht.

Die Komponente (A) liegt erfindungsgemäß vorzugsweise in Pulverform vor und ist als solche bevorzugt wasserunlöslich.

Der Anteil der Komponente (A) in der Stützpaste beträgt vorzugsweise 1-70 Gew.-%, besonders bevorzugt 20 - 70 Gew.-%.

Die Komponente (A) enthält vorzugsweise solche anorganischen Stoffe, die bei Temperaturerhöhung Wasser abgeben. Hierfür sind Hydroxide, Oxidhydrate und/oder Verbindungen mit Kristallwasser besonders geeignet. Ganz besonders geeignet sind Aluminiumhydroxid, Aluminiumoxidhydrat und Magnesiumhydroxid sowie deren Mischungen.

Die in der Komponente (A) enthaltenen Stoffe, insbesondere die darin enthaltenen anorganischen Stoffe, sollen vorzugsweise thermisch stabil sein, zumindest aber bei Temperaturerhöhung in eine thermisch stabile Form übergehen können. Ferner ist es vorteilhaft, wenn keine Ionen eingebracht werden, die mit dem Formteil eine chemische Reaktion eingehen oder zu Verfärbungen führen.

Vorzugsweise werden in der Komponente (A) solche Verbindungen eingesetzt, bei denen die Wasserabgabe über einen weiten Temperaturbereich stattfindet. Solche Eigenschaften sind insbesondere bei anorganischen Oxiden, Hydroxiden und/oder aus Kristallwasser enthaltenden Salzen vorzufinden. Z.B findet der Glühverlust von Aluminiumhydroxid nach ISO 806 in einem Temperaturbereich zwischen 110 °C und 1100 °C statt und beträgt dabei ca. 35 Gew.-%. Dabei wandelt sich das Aluminiumhydroxid nach vollständiger Wasserabspaltung zu thermisch und chemisch inertem Aluminiumoxid. Durch die Abgabe des Wassers aus der Komponente (A) bzw. aus den darin enthaltenen anorganischen Stoffen reduziert sich auch deren Volumen. Dies unterstützt zugleich die Kompensation der Wärmeausdehnung der Stützpaste. Dadurch werden auch Spannungen verhindert, die durch die unterschiedlichen Wärmeausdehnungskoeffizienten während der Aufheizphase aufgebaut werden können sowie bei der Abkühlung des Systems Formteil/Stützpaste nach der Durchführung der Sinterung/Kristallisation entstehen und dabei auch zu geometrischen Deformationen des Formteils führen können.

Der Darstellung des beispielhaften Einsatzes von Aluminiumhydroxid ist somit zu entnehmen, dass es bei der Verarbeitung zu einem Masseverlust und damit auch zu einer Volumenreduktion der Komponente (A) kommt. Erfindungsgemäß ist es daher vorteilhaft, durch weitere Komponenten diese Volumenreduktion zu reduzieren bzw. auf einen bestimmten Wert einzustellen.

Erfindungsgemäß enthält die Stützpaste demgemäß eine Komponente (B) als weiteren Füllstoff. Hierfür werden vorzugsweise Füllstoffe eingesetzt, die während der thermischen Vorgänge praktisch keine Volumenänderung zeigen und in Abhängigkeit vom vorgesehenen Temperaturbereich der Sinterung/Kristallisation eingesetzt werden. Insbesondere finden Glas-, Glaskeramik-, SiO₂-, Al₂O₃-, ZrO₂- oder MgO-Pulver erfindungsgemäß Verwendung. Dabei ist darauf zu achten, dass keine der verwendeten Komponenten (A) oder (B) eine chemische Reaktion mit dem zu stützenden Formteil eingeht oder zu dessen Verfärbung führt.

Der Anteil der Komponente (B) beträgt vorzugsweise 8 bis 80 Gew.-%, besonders bevorzugt 9 bis 60 Gew.-%.

Zur Herstellung der erfindungsgemäßen Stützpaste werden vorzugsweise 5 bis 70 Gew.%, vorzugsweise 10 bis 49 Gew.-%, besonders bevorzugt 10 bis 40 Gew.-%, ganz besonders bevorzugt 20 bis 35 Gew.-% Lösungsmittel zugesetzt. Hierfür werden erfindungsgemäß die Komponenten (A) und (B) mit Wasser und/oder einem rückstandsfrei verbrennenden organischen Lösungsmittel zu einer Paste vermischt. Geeignete organische Lösungsmittel sind z.B. Alkohole, Ketone oder flüssige Aliphate.

Um die Homogenität und Geschmeidigkeit der Pasten zu verbessern, kann die erfindungsgemäße Paste vorzugsweise 0 bis 15 Gew.-% Hilfsmittel, bevorzugt 0,1 bis 10 Gew.-% Hilfsmittel enthalten.
So wurde gefunden, dass durch die Verwendung von hochdispersen Metalloxiden Pasten erhalten werden, die sich leicht applizieren lassen und eine ausgezeichnete Lagerstabilität aufweisen. Meist werden diese Metalloxide mittels Flammenpyrolyse aus den entsprechenden Halogeniden oder Alkoholaten hergestellt und besitzen eine sehr kleine Primärpartikelgröße. Beispiele für solche hochdispersen Metalloxide sind z.B. Aluminiumoxid (Alox® C) oder Siliziumdioxid (Aerosil®), beide von der Degussa AG.

Der Vorteil dieser anorganischen Verdicker ist, dass sie im Gegensatz zu den organischen Verdickern nicht ausbrennen und somit zu keinem zusätzlichen Volumenschwund führen.
Weiterhin besteht kein Risiko, dass bei der Verbrennung evtl. rußige Rückstände verbleiben, die zu einer Verschmutzung oder gar dauerhaften Verfärbung des Formteils führen.
Weitere wichtige Kriterien für den Füllgrad und die Konsistenz der Paste sind die Korngrößen der Füllstoffe und deren Verdickungswirkung im jeweiligen rein anorganischen oder anorganisch/organischen System. Korngrößen von 10 bis 500 nm eignen sich als Verdicker am besten und sind maßgeblich für eine homogene lagerstabile Konsistenz. Partikel mit Korngrößen über 0,5 µm eignen sich sehr gut, um hohe Füllgrade und somit hohe Trockenrückstände zu erzielen. Währenddessen führen Korngrößen über 50 µm zu einer sandigen und somit schlecht dosierbaren Konsistenz. Um ein vorzeitiges Austrocknen der Pasten zu vermeiden, kann es von Vorteil sein, lösliche organische Substanzen oder anorganische Salze einzusetzen.
Werden wässrige Systeme mit neutralem pH gewünscht, ist es sinnvoll, die Mischung von z.B. Aluminiumoxidhydrat und pyrogenem Aluminiumoxid entsprechend dem gewünschten pH einzustellen.

Die Komponenten (A), (B) und ggf. die weiteren Hilfsmittel und Additive sowie Bindemittel können in Gegenwart der oben erwähnten Lösemittel zu einer Paste mittels geeigneten Maschinen z. B. Knet- und Teigmaschinen vermischt werden.
Bevorzugt ist schließlich auch der Zusatz von 0 bis 20 Gew.-% Bindemittel. Bevorzugte Bindemittel sind niedrig schmelzende Wachse, Polyethylenglycole oder Gemische hiervon.

Die angegebenen Gewichtsprozente der Komponenten (A), (B) Lösungsmittel, Hilfsmittel und Bindemittel addieren sich auf 100 Gew.-%.

Aus den vorstehend genannten Komponenten können Brenn- und Stützpasten hergestellt werden, die bis zu einer Temperatur von etwa 1100 °C optimal funktionieren, keine Reaktionen mit den Formteilen aus Gläsern bzw. Glaskeramiken eingehen und zu keinen Verfärbungen führen. Weiterhin sind die Pastenreste nach den Kristallisations- bzw. Sinterprozessen leicht von der Oberfläche der Formteile zu entfernen.

Nachfolgend werden verschiedene Zusammensetzungen für solche Pasten angegeben, die die Erfindung kennzeichnen. Diese Beispiele sind dabei nicht die Erfindung limitierend.

**Tabelle 1**

| Zusammensetzungen für Brenn- und Stützpasten | | | | | | | |
|---|---|---|---|---|---|---|---|
| (Angaben in Gew.-%) | | | | | | | |
| Komponente | 1 | 2 | 3 | 4 | 5 | 6 | Vergleichspaste |
| Wasser (deionisiert) | 23.10 | 25.90 | 27.00 | 27.80 | 24.50 | 29.00 | 65-70 |
| Al₂O₃ (Alox® C)¹ | - | 8.00 | 6.00 | 3.10 | - | 3.20 | - |
| SiO₂ (Aerosil® 200)²⁾ | - | - | - | - | 9.10 | - | - |
| Amporphes SiO₂ ^{*)} | - | - | - | - | - | - | 5-10 |
| Aluminiumhydroxid³⁾ | 67.30 | 21.40 | - | 25.80 | - | - | - |
| Magnesiumhydroxid⁴⁾ | - | - | 25.00 | - | - | - | - |
| Aluminiumoxid-Pulver⁵⁾ | - | - | - | 43.30 | - | - | - |
| Quarz-Pulver⁶⁾ | 9.60 | 44.50 | 42.00 | - | 66.40 | 67.80 | - |
| Hydroxyethylcellulose⁷⁾ | - | 0.20 | - | - | - | - | 1-3 |
| Aluminiumsilikatfasern^{*)} | - | - | - | - | - | - | 20-25 |

| | | | | | | | |
|---|---|---|---|---|---|---|---|
| Angaben zu den verwendeten Rohstoffen: 1) Aerosil ALU C Firma Degussa, mittlere Primärteilchengröße 13 nm, BET-Oberfläche 100 ± 15 m²/g 2) Aerosil 200 Firma Degussa, mittlere Primärteilchengröße 12 nm, BET-Oberfläche 200 ± 25 m²/g 3) Aluminiumhydroxid purum; Fluka Art.-Nr. 11033 4) Magnesiumhydroxid reinst.; MERCK Art.-Nr. 5870 5) Aluminiumoxid-Pulver; Spezialstrahlmittel Ivoclar AG 6) Quarz-Pulver; Mikro-Dorsilit 405®, Fa. Dorfner, Korngröße 16 µm 7) Hydroxyethylcellulose mittelviskos; Fluka Art.-Nr. 54290 *) Keine Angaben des Herstellers vorliegend | | | | | | | |

### Herstellung der Pasten

Die Herstellung der Pasten erfolgt in einem Lindenkneter (Firma Linden Typ LPM 2 SP) bei Raumtemperatur:

Das Wasser, ggf. mit einem gelösten Salz oder Cellulose wird im Kneter vorgelegt. Anschließend wird das Alox® C 30 Minuten lang homogen eingemischt. Im nächsten Schritt wird z.B. das Aluminiumhydroxid zugegeben und ebenfalls 30 Minuten gemischt. Danach wird z.B. Quarz-Pulver portionsweise eingearbeitet und nach der letzten Zugabe nochmals 30 Minuten vermischt.

Die gewünschte Soll-Konsistenz wird anschließend mittels eines Penetrometers PNR 10 gemessen und ggf. mit Wasser verdünnt oder mit Quarz-Pulver verdickt. Schwerkraft-Penetrometer werden zur Bestimmung der Konsistenz über die Eindringtiefe angewendet. Dabei wird ein nadel- oder kegelförmiger Stift auf die Oberfläche des Untersuchungsmaterials aufgesetzt und sinkt dann während einer definierten Zeitspanne mit seinem Eigengewicht in das Prüfgut ein. Die Eindringtiefe wird als Penetrationseinheit in mm angegeben und stellt ein Maß für die Plastizität oder Konsistenz dar. Das hier verwendete Penetrometer PRN 10 wird von der Firma Petrotest vertrieben.

Die Homogenität der Paste bzw. der vollständige Aufschluss der Agglomerate wird mittels einem Grindometer (z.B. ZGR 2021 der Fa. Zenter) überprüft.

Grindometer (Methode nach Hegman) werden zur Bestimmung der Mahlfeinheit (Körnigkeit bzw. Kornfeinheit) von Beschichtungsstoffen, Druckfarben, Pasten und ähnlichen Produkten verwendet. Dabei wird die Paste in die tiefste Stelle der Grindometerrinne gefüllt und mit einem Schaber in Richtung des flachen Endes gezogen. Anschließend wird ermittelt, ab welcher Rinnentiefe die Füllerpartikel bzw. Agglomerate von dem Schaber mitgezogen werden. Dies ist deutlich an der Spur in der Paste zu erkennen. Anschließend kann die Feinheit in µm an der am Rande des Gindomterers eingravierten Skala abgelesen werden. Übliche Rinnen sind keilförmig auslaufend von 50 bis 0 µm.

Die auf diese Weise hergestellten Pasten wurden in einem Keramikbrennofen Programat® P200 (Ivoclar Vivadent AG) getestet. Dazu wurde auf eine Unterlage aus Siliziumnitrit eine ca. 2-3 mm starke Schicht der Paste ausgestrichen, auf die eine mit der Stützpaste gefüllte Keramik-Krone aufgesetzt wurde. Danach wurde die Testanordnung nach einem für in der Dentaltechnik üblichen Brennprozess die Stützwirkung der Paste geprüft. Das Brennprogramm war dabei wie folgt eingestellt:
Aufheizrate von 60 K/min. auf 850°C
Haltezeit von 10 min. bei 850°C
Abkühlrate von 30 K/min. auf 700°C.
Das Brennprogramm kann mit oder ohne Vakuum durchgeführt werden.
Nach dem Entfernen der jeweiligen Testkronen aus der Brennkammer wurden die Ergebnisse mit den verschiedenen Pasten wie folgt bewertet:

**Tabelle 2**

| Ergebnisse der Versuche | | | |
|---|---|---|---|
| Beispiel | Konsistenz der Paste | Haftung der Paste an der Innenseite | Stützwirkung bei 850°C |
| 1 | Gut, standfest | Keine Haftung | Gut |
| 2 | Gut, standfest | Keine Haftung | Gut |
| 3 | Gut, standfest | Keine Haftung | Gut |
| 4 | Gut, standfest | Keine Haftung | Gut |
| 5 | Leichtes Fließen | Klebt stark an der Innenseite | Noch akzeptable Passgenauigkeit |
| 6 | Gut, standfest | Klebt an der Innenseite | Schlechte Passgenauigkeit |
| 7 (Vergleichspaste) | Gut, standfest | Klebt an der Innenseite, bildet Rückstände an der Oberfläche | Gut |

Bei keiner der oben getesteten Pasten ist es zu einer Verfärbung der Krone, weder auf der Innen- noch auf der Außenseite, gekommen.
Die Haftung der Pasten wurde nur subjektiv getestet, indem mit einem Metallspatel (zahntechnisches Modellierinstrument) die Pastenreste nach dem Sinter- bzw. Kristallisationsprozess herausgekratzt und anschließend mit einem Dampfstrahlgerät abgedampft wurden. Die zurückbleibenden Pastenreste lassen sich auch mittels eines Ultraschallbades in einem Seifen/Wassergemisch leicht von der Kroneninnenseite entfernen.

## Patentansprüche

1. Verwendung einer Mischung enthaltend
- 1 bis 70 Gew.-% einer Komponente (A), die in einem Temperaturbereich zwischen 110°C und 1.100°C Wasser abgibt,
- 8 bis 80 Gew.-% einer Komponente (B), die bei Temperaturen zwischen 110°C und 1.100°C geometrisch stabil ist,
- 5 bis 70 Gew.-% Lösemittel,
- 0 bis 20 Gew.-% Bindemittel,
- 0 bis 15 Gew.-% weitere Hilfsmittel und Additive,
wobei sich die einzelnen Gewichtsprozente auf 100 Gew.-% addieren, als Stützpaste, **dadurch gekennzeichnet, dass**
Komponente (A) Hydroxide, Oxidhydrate und/oder Verbindungen mit Kristallwasser und
Komponente (B) Glas-, Glaskeramik-, SiO₂-, Al₂O₃-, ZrO₂- oder MgO-Pulver als Füllstoffe enthält.

2. Verwendung nach Anspruch 1 für den Dentalbereich.

3. Verwendung nach Anspruch 1, **dadurch gekennzeichnet, dass** die Mischung
- 20 bis 70 Gew.-% der Komponente (A)
- 9 bis 60 Gew.-% der Komponente (B),
- 15 bis 49 Gew.-% des Lösungsmittels,
- 0 bis 20 Gew.-% Bindemittel,
- 0,1 bis 10 Gew.-% weitere Hilfsmittel und Additive enthält,
wobei sich die einzelnen Gewichtsprozente auf 100 Gew.-% addieren.

4. Verwendung nach Anspruch 1, **dadurch gekennzeichnet, dass** die Mischung als Lösemittel Wasser oder rückstandsfrei verbrennende organische Lösemittel oder Gemische hiervon enthält.

5. Verwendung nach Anspruch 1, **dadurch gekennzeichnet, dass** die Mischung als organische Lösemittel Alkohole, Ketone, flüssige Aliphate oder Gemische dieser Stoffe enthält.

6. Verwendung nach Anspruch 1, **dadurch gekennzeichnet, dass** die Mischung als Bindemittel niedrig schmelzende Wachse oder Polyethylenglykol oder Gemische hiervon enthält.

7. Verwendung nach Anspruch 1, **dadurch gekennzeichnet, dass** die Mischung als Hilfsmittel oder Additive Verdicker oder Gleithilfsmittel enthält.

8. Verwendung nach Anspruch 1, **dadurch gekennzeichnet, dass** die Mischung als Verdicker Aluminiumoxid oder Siliziumdioxid oder Gemische hiervon enthält.

9. Verwendung nach einem der Ansprüche 1 bis 8 bei der Sinterung oder Kristallisation von glasigen oder glaskeramischen Formteilen.

## Claims

1. Use of a mixture containing
- from 1 to 70% by weight of a component (A) which gives off water in a temperature range from 110°C to 1100°C,
- from 8 to 80% by weight of a component (B) which is geometrically stable at temperatures in the range from 110°C to 1100°C,
- from 5 to 70% by weight of solvent,
- from 0 to 20% by weight of binder,
- from 0 to 15% by weight of further auxiliaries and additives,
where the individual percentages by weight add up to 100% by weight, as support paste, **characterized in that** component (A) contains hydroxides, oxide hydrates and/or compounds having water of crystallization and component (B) contains glass, glass-ceramic, Si0₂, Al₂O₃, ZrO₂ or MgO powder as fillers.

2. Use according to Claim 1 for the dental sector.

3. Use according to Claim 1, **characterized in that** the mixture contains
- from 20 to 70% by weight of component (A),
- from 9 to 60% by weight of component (B),
- from 15 to 49% by weight of solvent,
- from 0 to 20% by weight of binder,
- from 0.1 to 10% by weight of further auxiliaries and additives,
where the individual percentages by weight add up to 100% by weight.

4. Use according to Claim 1, **characterized in that** the mixture contains water or organic solvents which burn without leaving a residue or mixtures thereof as solvent.

5. Use according to Claim 1, **characterized in that** the mixture contains alcohols, ketones, liquid aliphatics or mixtures of these materials as organic solvents.

6. Use according to Claim 1, **characterized in that** the mixture contains low-melting waxes or polyethylene glycol or mixtures thereof as binder.

7. Use according to Claim 1, **characterized in that** the mixture contains thickeners or lubricants as auxiliaries or additives.

8. Use according to Claim 1, **characterized in that** the mixture contains aluminium oxide or silicon dioxide or mixtures thereof as thickeners.

9. Use according to any of Claims 1 to 8 in the sintering or crystallization of vitreous or glass-ceramic mouldings.

## Revendications

1. Utilisation d'un mélange, contenant
- 1 à 70% en poids d'un composant (A), qui libère de l'eau dans une plage de température entre 110°C et 1100°C,
- 8 à 80% en poids d'un composant (B), qui est géométriquement stable aux températures entre 110°C et 1100°C,
- 5 à 70% en poids de solvant,
- 0 à 20% en poids de liants,
- 0 à 15% en poids d'autres adjuvants et additifs,
où les différents pourcentages en poids s'ajoutent à 100% en poids, comme pâte de support, **caractérisée en ce que**
- le composant (A) contient des hydroxydes, des oxydes hydratés et/ou des composés avec de l'eau de cristallisation et
- le composant (B) contient de la poudre de verre, de céramique de verre, de SiO₂, d'Al₂O₃, de ZrO₂ ou de MgO comme charges.

2. Utilisation selon la revendication 1 destinée au domaine dentaire.

3. Utilisation selon la revendication 1, **caractérisée en ce que** le mélange contient
- 20 à 70% en poids du composant (A),
- 9 à 60% en poids du composant (B),
- 15 à 49% en poids du solvant,
- 0 à 20% en poids de liants,
- 0,1 à 10% en poids d'autres adjuvants et additifs, où les différents pourcentages en poids s'ajoutent à 100% en poids.

4. Utilisation selon la revendication 1, **caractérisée en ce que** le mélange contient, comme solvant, de l'eau ou des solvants organiques brûlant sans laisser de résidus ou leurs mélanges.

5. Utilisation selon la revendication 1, **caractérisée en ce que** le mélange contient, comme solvants organiques, des alcools, des cétones, des composés aliphatiques liquides ou des mélanges de ces substances.

6. Utilisation selon la revendication 1, **caractérisée en ce que** le mélange contient, comme liants, des cires de bas point de fusion ou du polyéthylèneglycol ou leurs mélanges.

7. Utilisation selon la revendication 1, **caractérisée en ce que** le mélange contient, comme adjuvants ou additifs, des épaississants ou des lubrifiants.

8. Utilisation selon la revendication 1, **caractérisée en ce que** le mélange contient, comme épaississants, de l'oxyde d'aluminium ou du dioxyde de silicium ou leurs mélanges.

9. Utilisation selon l'une quelconque des revendications 1 à 8 lors du frittage ou de la cristallisation de pièces façonnées en verre ou en céramique de verre.
